# EUROPEAN PATENT SPECIFICATION

(11) **EP 2 893 793 B1**
(45) Date of publication and mention of the grant of the patent: **26.10.2016**
(21) Application number: 14196738.0
(22) Date of filing: 08.12.2014
(51) Int. Cl.: A01B 63/112, B60D 1/24, B60D 1/62

(54) **Draft force sensing system for an agricultural tractor**
Durchzugskraftmesssystem für Ackerschlepper
Système de détection de force de traction pour un tracteur agricole

(30) Priority: 19.12.2013 US 201314135163
(43) Date of publication of application: 15.07.2015
(73) Proprietor: Deere & Company, Moline, IL 61265 (US)
(72) Inventor: Tilkes, Andrew K., Cedar Falls, IA Iowa 50613 (US); Roth, Jonothan T., Cedar Falls, IA Iowa 50613 (US); Kreis, Edwin R., Waterloo, IA Iowa 50703 (US); Kollath, Michael D., Reinbeck, IA Iowa 50669 (US); Fischer, Douglas R., Dike, IA Iowa 50624 (US); Heimbuch, Benjamin J., Wickenburg, IA Iowa 85390 (US); Bowman, Dennis A., Denver, IA Iowa 50622 (US); Earley, Mark S., Traer, IA Iowa 50675 (US)
(74) Representative: Dehnhardt, Florian Christopher

(56) References cited:
- US-A- 4 266 616
- US-A- 4 425 970
- US-A- 4 510 814
- US-A- 5 042 586
- US-A- 5 109 707
- US-B1- 8 496 068

## Description

The present invention refers to a draft force sensing system for an agricultural tractor.

Agricultural implements can be mounted directly to agricultural tractors using a conventional three point hitch. Three point hitch can be controlled by a hitch control system which raises and lowers the three point hitch in response to a number of sensed parameters, including sensed draft force. Such hitch control systems can operate to lower and raise an agricultural implement while maintaining a constant load on the agricultural tractor. The agricultural implement is actually able to work at a deeper average depth as the agricultural tractor is able to operate at a higher average power with such hitch control system.

Various draft force sensing systems have been developed to provide a sensed draft force signal. Certain current production draft force sensing systems have a number of moving parts that require periodical maintenance, including removing mud and dirt accumulation and lubrication of a draft sensor plunger to prevent moisture and dirt contamination. In certain conditions, the dirt and mud accumulation actually prevents component movement which causes false sensing of the draft force signals. Changes in tractor frame design will require new draft force sensing designs. Other current production draft force sensing systems have costly draft sensing pins, bending bars, and draft sensing shafts. Draft sensing pins require two instrument pins which double the cost and halve the reliability. The bending bar and draft sensing shaft systems have moving parts and require a sealed compartment and a fair amount of space. The zero load voltage for the system is set by adjusting the length of a spring steel strap that mounts over a sensor plunger and the ends of which are attached to the body of the shaft. The factory consistently has issues setting the voltage. The spring steel strap and sensor plunger produce an inconsistent voltage during spring steel strap adjustment. The current draft force sensing system on 4WD agricultural tractors measures the deflection between the draft link mount straps. The components are open to the elements and exposed to mud, dirt, and debris.

It is desired to provide a draft force sensing system which can be installed within the space available in future production agricultural tractors. It is also desired to provide a draft force sensing system which is better protected from environmental contamination and which is sealed and less prone to accumulate debris.

These and other objects are achieved by the present invention, wherein a draft force sensing system for an agricultural tractor is provided. The draft force sensing system has left and right draft bars and a sensing unit. The sensing unit comprises a housing. Laterally spaced apart left and right pivot pins are mounted in the housing. A left sensing arm is pivotally mounted on the left pivot pin, the left sensing arm having a shorter arm portion movable in response to draft force applied to the left draft bar and having a longer arm portion. A right sensing arm is pivotally mounted on the right pivot pin, the right sensing arm having an shorter arm portion movable in response to draft force applied to the right draft bar and having a longer arm portion. A resilient member is coupled to the left and right sensing arms and biased to urge the left and right sensing arms towards each other. A stop member is positioned between the left and right sensing arms and engagable with the left and right sensing arms to limit movement of the left and right sensing arms towards each other. A draft force transducer engages the longer arm portions of the left and right sensing arms, the draft force transducer generating a draft force signal representing a distance between the longer arm portions.

For a complete understanding of the objects, techniques, and structure of the invention reference should be made to the following detailed description and accompanying drawings:
- Fig. 1: is a perspective rear view of a hitch frame for an agricultural tractor, wherein a conventional three point hitch is mounted to the hitch frame,
- Fig. 2: is a perspective bottom front view of the hitch frame with a draft force sensing system embodying the invention, wherein the draft force sensing system comprises a sensing unit,
- Fig. 2A: is a perspective bottom front view of the hitch frame with the draft force sensing system removed,
- Fig. 3: is a bottom view of the hitch frame of Fig. 1,
- Fig. 4: is a bottom perspective view of a portion of the hitch frame of Fig. 3,
- Fig. 5: is a sectional view along lines 5-5 of Fig. 4,
- Fig. 6: is perspective view of the draft force sensing system showing the sensing unit in more detail,
- Fig. 7: is a sectional view along lines 7-7 of Fig. 6, and
- Fig. 8: is a sectional view along lines 8-8 of Fig. 6.

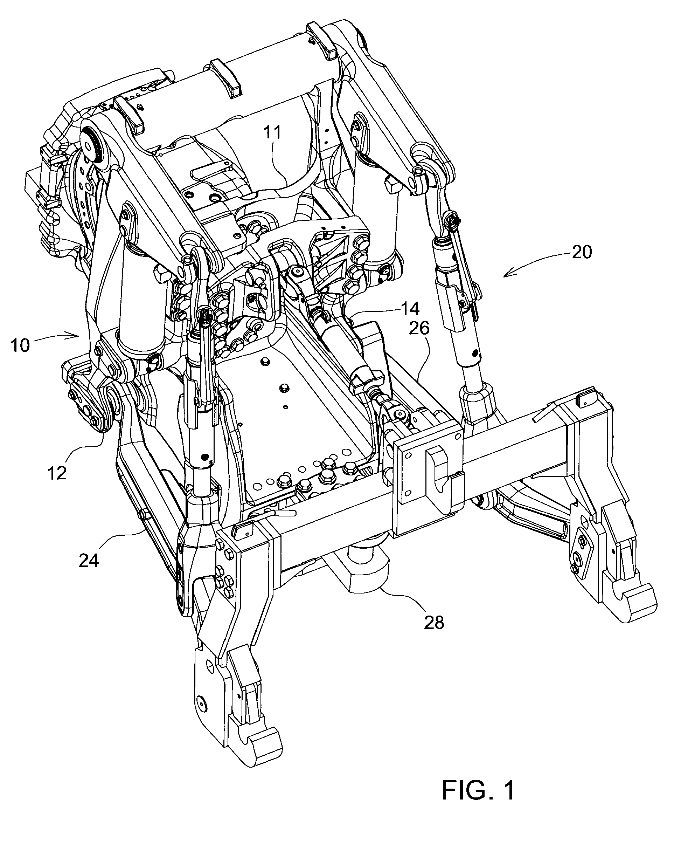

Referring to Figs. 1, 2 and 3, a hitch frame 10 is adapted to be attached to a rear end frame of a work vehicle, such as an agricultural tractor (not shown). The hitch frame 10 includes a main body 11 and left and right draft link supports or draft ears 12, 14. A conventional three point hitch 20 is mounted to the hitch frame 10, and includes left and right draft links 24, 26 which are coupled to the left and right draft ears 12, 14 in a known manner. A conventional drawbar 28 extends in a fore-and-aft direction below the hitch frame 10.

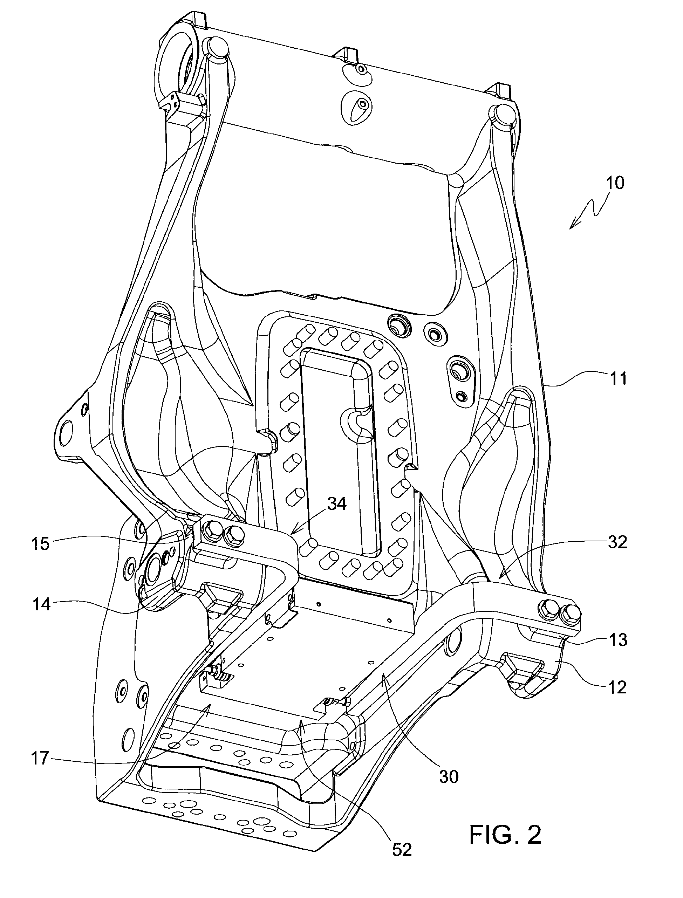

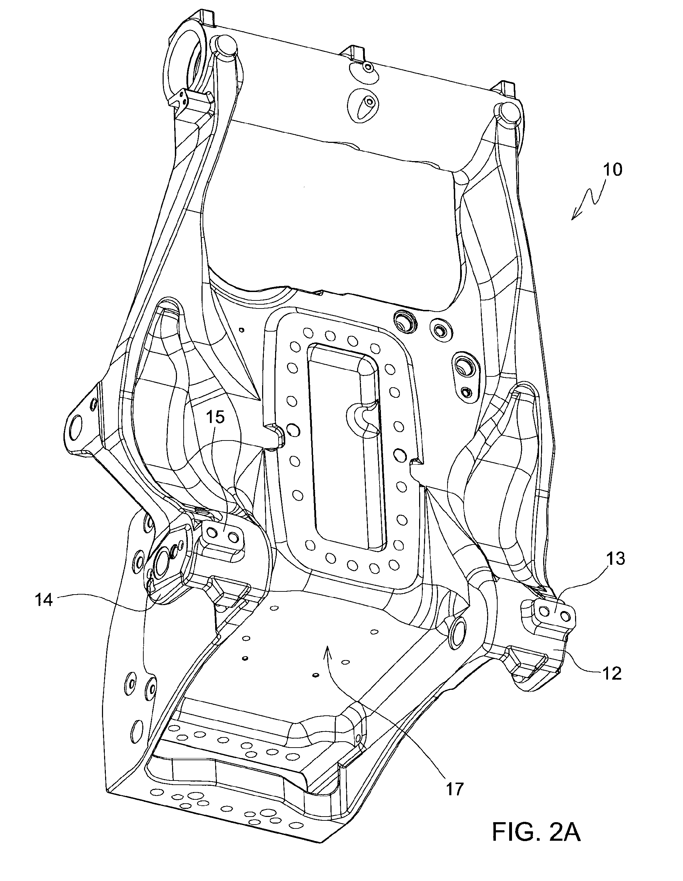

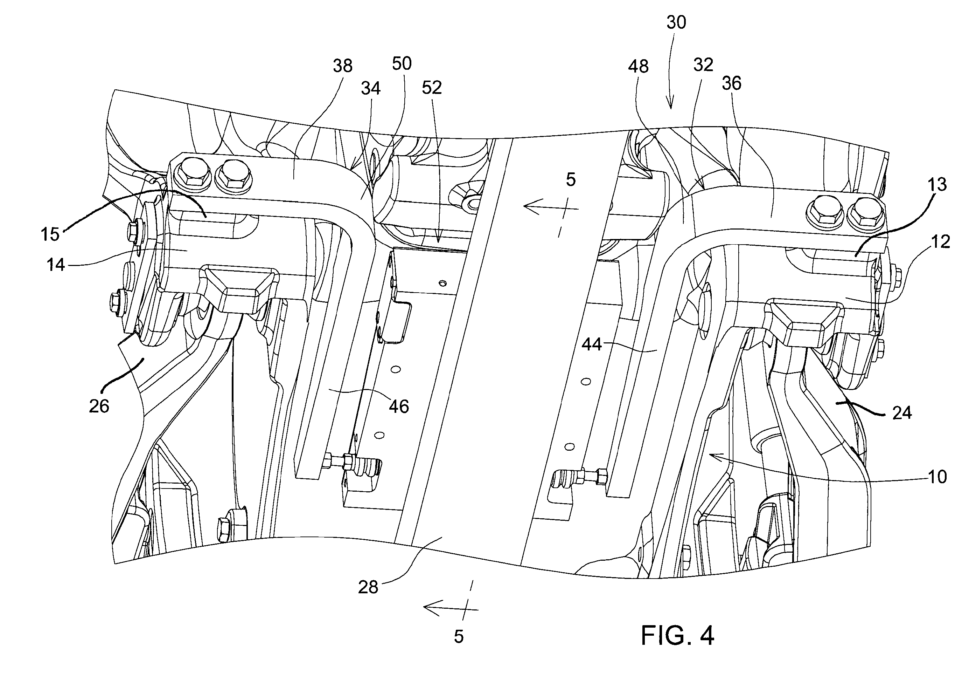

Referring now to Fig. 2A, each of the left and right draft ears 12, 14 of the hitch frame 10 includes a corresponding forwardly facing mounting surface 13, 15. The hitch frame 10 forms a downwardly opening pocket 17 which extends rearwardly with respect to the left and right draft ears 12, 13. Referring now to Figs. 2 to 4, a draft force sensing system 30 senses draft forces which are applied to the left and right draft links 24,26, and generates an electrical draft force signal. The draft force sensing system 30 includes left and right L-shaped draft bars 32, 34. Each of the left and right L-shaped draft bars 32, 34 includes a first part 36, 38 which is attached to the mounting surface 13, 15 of a corresponding one of the left and right draft ears 12, 14. Each of the left and right L-shaped draft bars 32, 34 also has a second part 44, 46 positioned rearwardly and inwardly with respect to the corresponding first part 36, 38. The first parts 36, 38 project laterally outwardly and away from each other. Each second part 44, 46 extends rearwardly from an inner end of the corresponding first part 36, 38. Each first part 36, 38 is joined to the second part 44, 46 by a corresponding curved joint 48, 50.

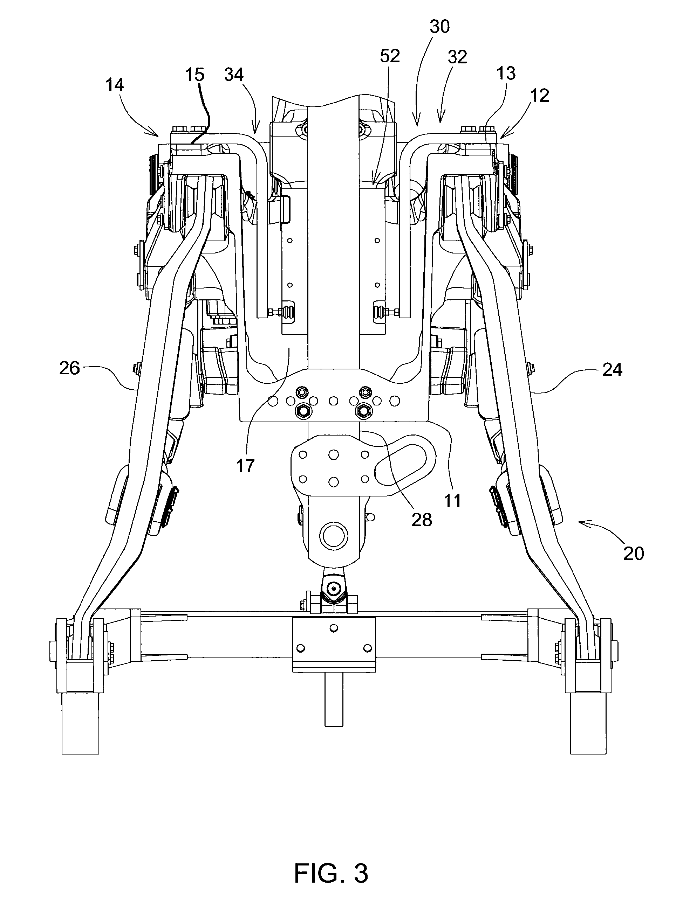

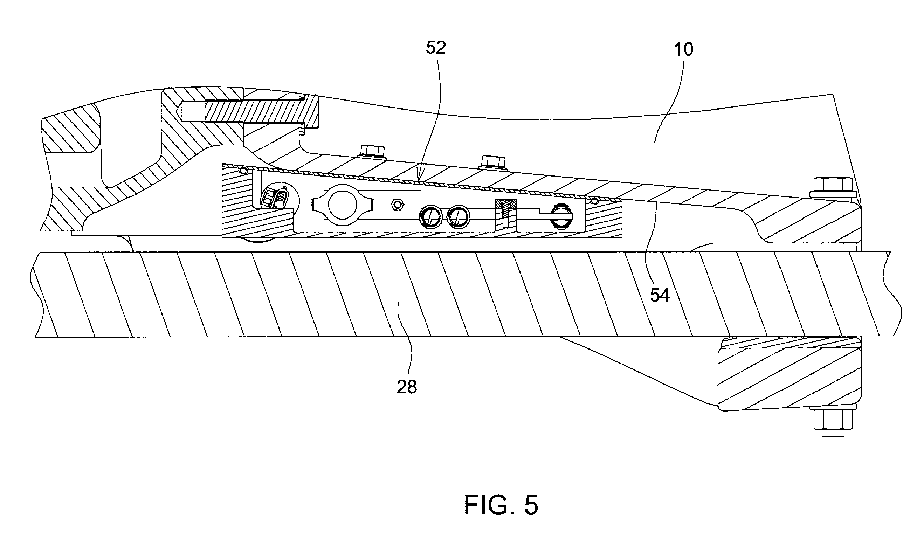

Referring now to Figs. 3 to 5, a sensing unit 52 is mounted in the pocket 17 and is attached to a downwardly facing surface 54 of the hitch frame 10 between the left and right L-shaped draft bars 32, 34 and between the drawbar 28 and the hitch frame 10.

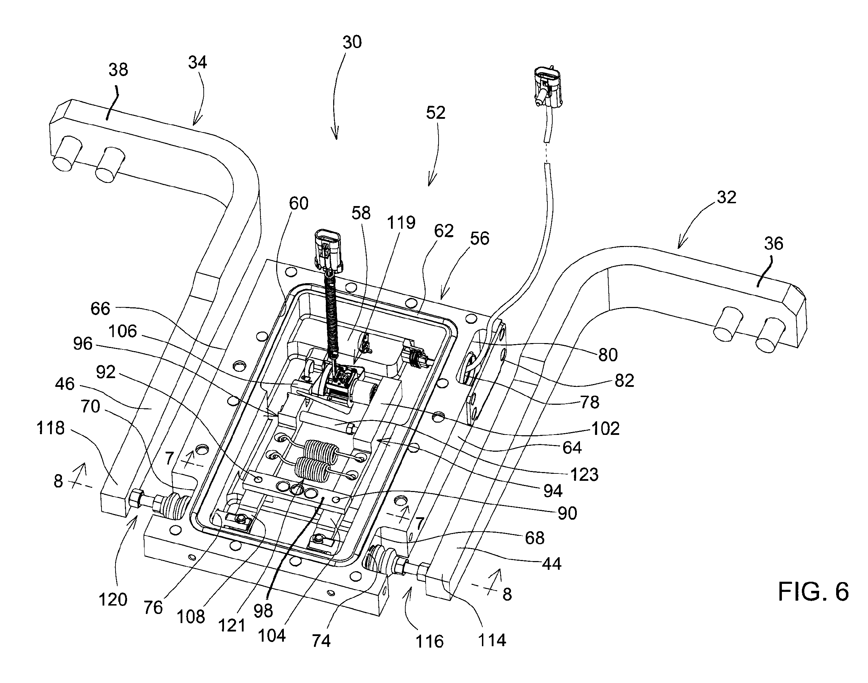

Referring now to Fig. 6, the sensing unit 52 includes a housing 56 which forms a cavity 58. The cavity 58 is surrounded by a seal groove 60 which receives a seal 62. The housing 56 forms a left side wall 64 and a right side wall 66. A left recess 68 is formed in the left side wall 64, and a right recess 70 is formed in the right side wall 66. Both recesses 68, 70 are near but spaced apart from a rear end of the housing 56. A left bore 74 communicates the cavity 58 with the left recess 68, and a right bore 76 communicates the cavity 58 with the right recess 70. A harness bore 78 communicates the cavity 58 with a harness recess 80 which is formed in the left side wall 64 near a forward end of the housing 56. Harness recess 80 is covered by a harness shield 82.

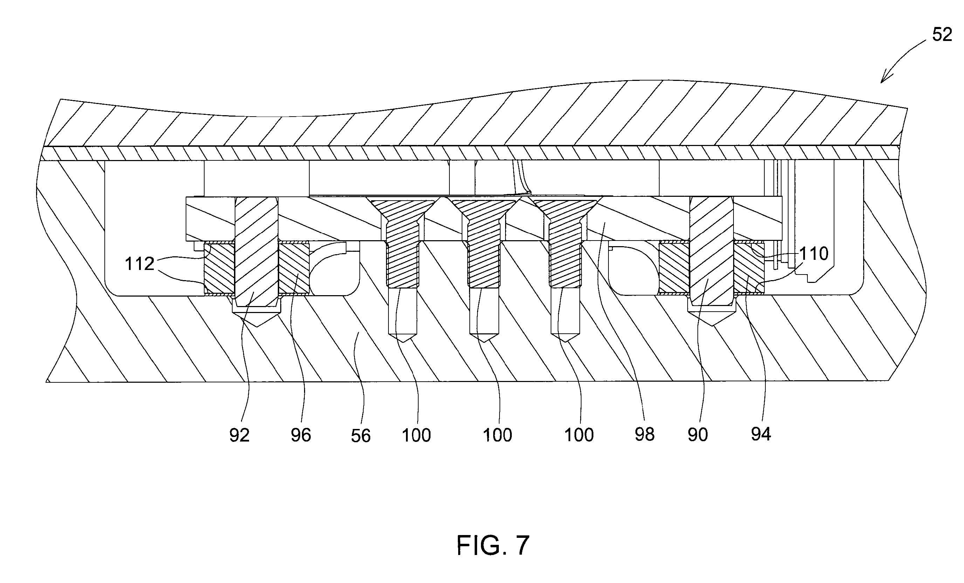

Referring now to Figs. 6, 7 and 8, the sensing unit 52 also includes laterally spaced apart left and right pivot pins 90, 92 which are press-fit into bores in the housing 56. Left and right sensing arms 94, 96 are pivotally mounted on the corresponding left and right pivot pins 90, 92. A bracing bar 98 receives the left and right pivot pins 90, 92 and is bolted to the housing 56 by three bolts 100. Left pivot pin 90 divides left sensing arm 94 into a longer arm portion 102 and a shorter arm portion 104. Right pivot pin 92 divides right sensing arm 96 into a longer arm portion 106 and a shorter arm portion 108. Washers 110 are placed on left pivot pin 90 on both sides of left sensing arm 94, and washers 112 are placed on right pivot pin 92 on both sides of right sensing arm 96. Left shorter arm portion 104 is coupled to an end 114 of left L-shaped draft bar 32 by left sensing link 116. Right shorter arm portion 108 is coupled to an end 118 of right L-shaped draft bar 34 by right sensing link 120. The longer arm portions 102, 106 of the left and right sensing arms 94, 96 engage the ends of a draft force transducer or linear displacement transducer 119. The longer arm portions 102, 106 move away from each other and disengage from the linear displacement transducer 119 when draft force exceeds a threshold.

A resilient member 121 includes a pair of coil springs and is coupled to the longer arm portions 102, 106 of the left and right sensing arms 94, 96, and is biased to urge the longer arm portions 102, 106 towards each other. A stop member 123 positioned between the longer arm portions 102, 106 and is engagable with the longer arm portions 102, 106 to limit movement of the longer arm portions 102, 106 towards each other.

The left and right sensing links 116, 120 extend transversely with respect to the fore-and-aft direction. Each of the left and right sensing links 116, 120 has an adjustable length. The linear displacement transducer 119 has a first end coupled to longer arm portion 102 and a second end coupled to longer arm portion 106. Linear displacement transducer 119 generates an electrical draft force signal representing a distance between the second parts 44, 46, since the deflection of the left and right sensing arms 94, 96 is a function of the draft force applied to the left and right draft ears 12, 14. Thus, the sensing unit 52 mechanically sums deflection of the second portions 44, 46 of the left and right L-shaped draft bars 32, 34 and applies the summed deflection to the linear displacement transducer 119. The second parts 44, 46 move away from each other and disengage from the left and right sensing links 116, 120 when draft force is less than a threshold.

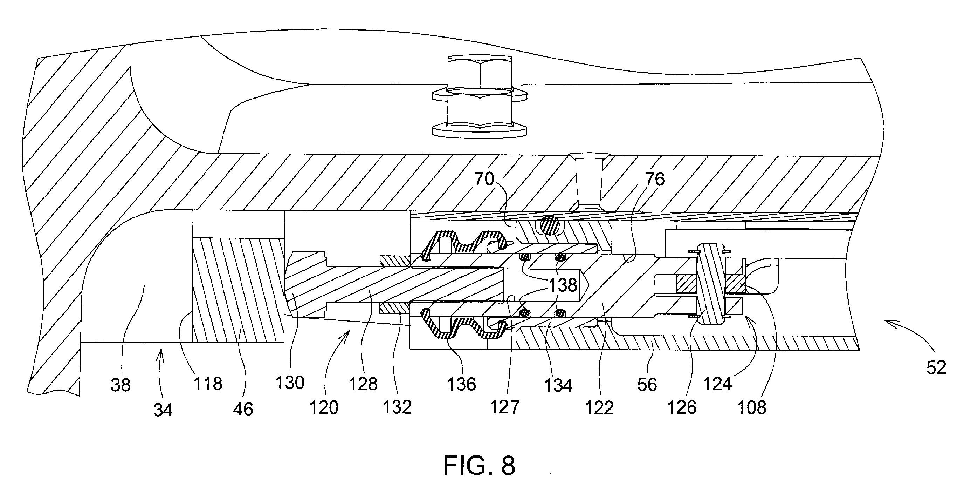

Referring now to Fig. 8, right sensing link 120 includes a stainless steel rod 122 which has a first end or forked end 124 which is pivotally coupled to right short arm portion 108 by a pivot pin 126. Rod 122 includes a threaded central axial bore 127 which receives a threaded bolt 128 which has a bolt head 130 which engages the end 118 of right L-shaped draft bar 34. A backup nut 132 is threaded onto threaded bolt 128 to hold threaded bolt 128 in a proper position relative to rod 122. A hollow bronze bushing 134 is received in right bore 76 and the rod 122 is slidably received by the bushing 134. A bellows seal 136 has an inner end attached to the bushing 134 and an outer end attached to an second end or outer end of the rod 122. A pair of O-ring seals 138 is mounted in grooves in an outer surface of rod 122 and provides a seal between the rod 122 and the bushing 134. Left sensing link 116 is a mirror image of right sensing link 120.

Viewing Fig. 6, an increase in substantially rearwardly directed draft forces will bend the left and right draft ears 12, 14 and cause the ends 114, 118 of the left and right L-shaped draft bars 32, 34 to move inwardly and towards each other. This causes the longer arm portions 102, 106 of left and right sensing arms 94, 96 to move away from each other and increase the length of the linear displacement transducer 119. In fact, if the draft forces exceed a high threshold, the longer arm portions 102, 106 will disengage from the linear displacement transducer 119 and thereby protect the linear displacement transducer 119 from draft force overloads.

Also viewing Fig. 6, a decrease in draft forces (or a forwardly directed draft force) will cause the ends 114, 118 of the left and right L-shaped draft bars 32, 34 to move outwardly and away from each other. This causes the longer arm portions 102, 106 of left and right sensing arms 94, 96 to move towards each other and decrease the length of the linear displacement transducer 119. In fact, if the draft forces are less than a low threshold, the ends 114, 118 will disengage the bolt heads 130 of the left and right sensor links 116, 120, and thereby protect the linear displacement transducer 119 from draft force underloads.

This draft force sensing system 30 mechanically sums the horizontal draft load between the left and right draft links 24, 26 of the three point hitch 20. The left and right draft links 24, 26 are coupled to parts of the hitch frame 10 which are flexible in response to horizontal loads and is stiff in response to vertical loads. The structure of the hitch frame 10 and the placement of the left and right L-shaped draft bars 32, 34 maximizes the horizontal draft load and minimizes the vertical draft load to be sensed by linear displacement transducer 119. The draft force sensing system 30 requires very little space and does not require periodical lubrication and maintenance. The hitch frame 10 is a casting which deflects in response to draft force load. This deflection is transferred to the left and right L-shaped draft bars 32, 34 mounted on the hitch frame 10. The ends 114, 118 of the left and right L-shaped draft bars 32, 34 swing due to deflection and twisting of the hitch frame 10. The ends 114, 118 push against the bolt heads 130 which are connected to a linkage assembly in the sensing unit 52. The linkage assembly includes the left and right sensing arms 94, 96 which magnify the deflection. The linear displacement transducer 119 is mounted between the left and right sensing arms 94, 96, and is compressed or decompressed depending upon the draft force load applied to the hitch frame 10. The draft force sensing system 30 mechanically sums the draft force loads from both left and right draft links 24, 26 together, so that only a single linear displacement transducer 119 is required, thus increasing the reliability of the draft force sensing system 30.

## Claims

1. A draft force sensing system for an agricultural tractor, the draft force sensing system (30) having left and right draft bars (32, 34) and a sensing unit (52), the sensing unit (52) comprising a housing (56); laterally spaced apart left and right pivot pins (90, 92) mounted in the housing (56); a left sensing arm (94) pivotally mounted on the left pivot pin (90), the left sensing arm (94) having a shorter arm portion (104) movable in response to draft force applied to the left draft bar (32) and having a longer arm portion (102); a right sensing arm (96) pivotally mounted on the right pivot pin (92), the right sensing arm (96) having an shorter arm portion (108) movable in response to draft force applied to the right draft bar (34) and having a longer arm portion (106); a resilient member (121) coupled to the left and right sensing arms (94, 96) and biased to urge the left and right sensing arms (94, 96) towards each other; a stop member (123) positioned between the left and right sensing arms (94, 96) and engagable with the left and right sensing arms (94, 96) to limit movement of the left and right sensing arms (94, 96) towards each other; and a draft force transducer (119) engaging the longer arm portions (102, 106) of the left and right sensing arms (94, 96), the draft force transducer (119) generating a draft force signal representing a distance between the longer arm portions (102, 106).

2. The draft force sensing system according to claim 1, **characterized by** further comprising left and right sensing links (116, 120), each of the left and right sensing links (116, 120) transmitting draft force from a corresponding one of the left and right draft bars (32, 34) to the corresponding one of the shorter arm portions (104, 108).

3. The draft force sensing system according to claim 2, **characterized in that** each of the left and right sensing links (116, 120) has an adjustable length.

4. The draft force sensing system according to claim 2 or 3, **characterized in that** each of the left and right sensing links (116, 120) comprises a rod (122) having a first end (124) and a second end, wherein the first end (124) being pivotally coupled to the corresponding one of the shorter arm portions (104, 108) and the second end having a threaded central axial bore (127), wherein a threaded bolt (128) is received by the threaded central axial bore (127) which has a bolt head (130) to which draft forces are applied.

5. The draft force sensing system according to claims 2 to 4, **characterized in that** each of the left and right sensing links (116, 120) comprises a backup nut (132) which is threaded onto the threaded bolt (128) to hold the threaded bolt (128) in a proper position relative to the rod (122).

6. The draft force sensing system according to claim 4 or 5, **characterized in that** each rod (122) is slidably received by a bushing (134) which is mounted in a corresponding one of a left and right bore (74, 76) in the housing (56).

7. The draft force sensing system according to claim 6, **characterized by** further comprising a bellows seal (136) having an inner end attached to the bushing (134) and an outer end attached to an outer end of the rod (122).

8. The draft force sensing system according to claim 6 or 7, **characterized by** an O-ring seal (138) which is mounted in a groove in an outer surface of the rod (122) and sealingly engages the rod (122) and the bushing (134).

9. The draft force sensing system according to claims 1 to 8, **characterized in that** the stop member (123) is located between the resilient member (121) and the draft force transducer (119).

10. The draft force sensing system according to claims 1 to 9, **characterized by** further comprising a hitch frame (10) adapted to be attached to a rear frame of the agricultural tractor; left and right draft link supports (12, 14), each of the left and right draft link supports (12, 14) coupling a corresponding left and right draft link (24, 26) to a corresponding left and right side of the hitch frame (10), each left and right draft bar (32, 34) having a first part (36, 38) attached to a corresponding one of the left and right draft link supports (12, 14), each of the left and right draft bars (32, 34) having a second part (44, 46) positioned rearwardly and inwardly with respect to its first part (36, 38), draft forces applied by the left and right draft links (24, 26) to the left and right draft link supports (12, 14) deflecting the second parts (44, 46) of the left and right draft bars (32, 34), the draft force transducer (119) generating the draft force signal in response to the deflection thereof.

11. The draft force sensing system according to claim 10, **characterized in that** each of the left and right draft bars (32, 34) is L-shaped, wherein the first part (36, 38) extends substantially perpendicularly with respect to the second part (44, 46).

## Patentansprüche

1. Zugkraftmesssystem für einen Ackerschlepper, wobei das Zugkraftmesssystem (30) linke und rechte Zugstangen (32, 34) und eine Messeinheit (52) aufweist, wobei die Messeinheit (52) ein Gehäuse (56); im Gehäuse (56) montierte seitlich beabstandete linke und rechte Führungsstifte (90, 92); einen am linken Führungsstift (90) drehbar montierten linken Tastarm (94), wobei der linke Tastarm (94) einen als Reaktion auf eine auf die linke Zugstange (32) ausgeübte Zugkraft bewegbaren kürzeren Armabschnitt (104) und einen längeren Armabschnitt (102) aufweist; einen am rechten Führungsstift (92) drehbar montierten rechten Tastarm (96), wobei der rechte Tastarm (96) einen als Reaktion auf eine auf die rechte Zugstange (34) ausgeübte Zugkraft bewegbaren kürzeren Armabschnitt (108) und einen längeren Armabschnitt (106) aufweist; ein mit den linken und rechten Tastarmen (94, 96) gekoppeltes und dahingehend beeinflusstes elastisches Element (121), dass es die linken und rechten Tastarme (94, 96) zueinander drängt; ein zwischen den linken und rechten Tastarmen (94, 96) positioniertes Anschlagelement (123), das mit den linken und rechten Tastarmen (94, 96) ineinandergreifen kann, um eine Bewegung der linken und rechten Tastarme (94, 96) zueinander zu begrenzen; und einen mit den längeren Armabschnitten (102, 106) der linken und rechten Tastarme (94, 96) ineinandergreifenden Zugkraft-Messwandler (119), wobei der Zugkraft-Messwandler (119) ein Zugkraftsignal generiert, das eine Entfernung zwischen den längeren Armabschnitten (102, 106) repräsentiert, umfasst.

2. Zugkraftmesssystem nach dem Anspruch 1, **dadurch gekennzeichnet, dass** es weiterhin linke und rechte Messverbindungen (116, 120) umfasst, wobei die linken und rechten Messverbindungen (116, 120) jeweils Zugkraft von einer entsprechenden der linken und rechten Zugstangen (32, 34) an den entsprechenden der kürzeren Armabschnitte (104, 108) übertragen.

3. Zugkraftmesssystem nach dem Anspruch 2, **dadurch gekennzeichnet, dass** jede der linken und rechten Messverbindungen (116, 120) eine anpassbare Länge aufweist.

4. Zugkraftmesssystem nach dem Anspruch 2 oder 3, **dadurch gekennzeichnet, dass** jede der linken und rechten Messverbindungen (116, 120) ein Gestänge (122) mit einem ersten Ende (124) und einem zweiten Ende aufweist, wobei das erste Ende (124) drehbar mit dem entsprechenden der kürzeren Armabschnitte (104, 108) gekoppelt ist und das zweite Ende eine gewindete Mittelachsenbohrung (127) aufweist, wobei ein Gewindebolzen (128), der einen Bolzenkopf (130) aufweist, auf den Zugkräfte ausgeübt werden, von der gewindeten Mittelachsenbohrung (127) aufgenommen wird.

5. Zugkraftmesssystem nach den Ansprüchen 2 bis 4, **dadurch gekennzeichnet, dass** jede der linken und rechten Messverbindungen (116, 120) eine Gegenmutter (132) umfasst, die auf den Gewindebolzen (128) geschraubt wird, um den Gewindebolzen (128) bezogen auf das Gestänge (122) in einer ordnungsgemäßen Position zu halten.

6. Zugkraftmesssystem nach dem Anspruch 4 oder 5, **dadurch gekennzeichnet, dass** jedes Gestänge (122) gleitend von einer Hülse (134) aufgenommen wird, die in einer entsprechenden einer linken und rechten Bohrung (74, 76) im Gehäuse (56) montiert ist.

7. Zugkraftmesssystem nach dem Anspruch 6, **dadurch gekennzeichnet, dass** es weiterhin eine Faltenbalgabdichtung (136) umfasst, die ein inneres Ende, das an der Hülse (134) befestigt ist, und ein äußeres Ende, das ein einem äußeren Ende des Gestänges (122) befestigt ist, aufweist.

8. Zugkraftmesssystem nach dem Anspruch 6 oder 7, **gekennzeichnet durch** eine O-Ringdichtung (138), die in einer Nut in einer Außenfläche des Gestänges (122) montiert ist und das Gestänge (122) mit der Hülse (134) abdichtend ineinandergreifen lässt.

9. Zugkraftmesssystem nach den Ansprüchen 1 bis 8, **dadurch gekennzeichnet, dass** das Anschlagelement (123) zwischen dem elastischen Element (121) und dem Zugkraft-Messwandler (119) positioniert ist.

10. Zugkraftmesssystem nach den Ansprüchen 1 bis 9, **dadurch gekennzeichnet, dass** es weiterhin einen Anhängebock (10), der ausgelegt ist, um an einem Heckrahmen des Ackerschleppers befestigt zu werden; und linke und rechte Zugverbindungsstützen (12, 14) umfasst, wobei die linken und rechten Zugverbindungsstützen (12, 14) jeweils eine entsprechende linke und rechte Zugverbindung (24, 26) mit einer entsprechenden linken und rechten Seite des Anhängebocks (10) koppeln, wobei die linke und die rechte Zugstange (32, 34) jeweils einen ersten Abschnitt (36, 38) aufweisen, der an einer entsprechenden der linken und rechten Zugverbindungsstützen (12, 14) befestigt ist, wobei die linken und rechten Zugstangen (32, 34) jeweils einen zweiten Abschnitt (44, 46) aufweisen, der bezogen auf den ersten Abschnitt (36, 38) nach rückwärts und nach innen gewandt positioniert ist, wobei Zugkräfte, die von den linken und rechten Zugverbindungen (24, 26) auf die linken und rechten Zugverbindungsstützen (12, 14) ausgeübt werden, die zweiten Abschnitte (44, 46) der linken und rechten Zugstangen (32, 34) auslenken, wobei der Zugkraft-Messwandler (119) das Zugkraftsignal als Reaktion auf deren Auslenkung generiert.

11. Zugkraftmesssystem nach dem Anspruch 10, **dadurch gekennzeichnet, dass** jede der linken und rechten Zugstangen (32, 34) L-förmig ist, wobei der erste Abschnitt (36, 38) sich bezogen auf den zweiten Abschnitt (44, 46) im Wesentlichen senkrecht erstreckt.

## Revendications

1. Système de détection de force de traction pour un tracteur agricole, le système de détection de force de traction (30) ayant des barres de traction gauche et droite (32, 34) et une unité de détection (52), l'unité de détection (52) comprenant un carter (56) ; des broches de pivotement gauche et droite (90, 92) espacées en côté fixées dans le carter (56) ; un bras de détection gauche (94) fixé de façon pivotante sur la broche de pivotement gauche (90), le bras de détection gauche (94) ayant une partie de bras plus courte (104) pouvant être déplacée en réponse à la force de traction appliquée à la barre de traction gauche (32) et ayant une partie de bras plus longue (102) ; un bras de détection droit (96) fixé de façon pivotante sur la broche de pivotement droite (92), le bras de détection droit (96) ayant une partie de bras plus courte (108) pouvant être déplacée en réponse à la force de traction appliquée à la barre de traction droite (34) et ayant une partie de bras plus longue (106) ; un élément élastique (121) couplé aux bras de détection gauche et droit (94, 96) et sollicité pour comprimer les bras de détection gauche et droit (94, 96) en direction l'un de l'autre ; un élément de butée (123) positionné entre les bras de détection gauche et droit (94, 96) et pouvant s'engrener avec les bras de détection gauche et droit (94, 96) pour limiter le mouvement des bras de détection gauche et droit (94, 96) en direction l'un de l'autre ; et un transducteur de force de traction (119) engrenant les parties de bras plus longues (102, 106) des bras de détection gauche et droit (94, 96), le transducteur de force de traction (119) générant un signal de force de traction représentant une distance entre les parties de bras plus longues (102, 106).

2. Système de détection de force de traction selon la revendication 1, **caractérisé en ce qu'**il comprend en outre des liaisons de détection gauche et droite (116, 120), chacune des liaisons de détection gauche et droite (116, 120) transmettant la force de traction de l'une des barres de traction gauche et droite (32, 34) correspondante à l'une des parties de bras plus courte (104, 108) correspondante.

3. Système de détection de force de traction selon la revendication 2, **caractérisé en ce que** chacune des liaisons de détection gauche et droite (116, 120) a une longueur réglable.

4. Système de détection de force de traction selon la revendication 2 ou 3, **caractérisé en ce que** chacune des liaisons de détection gauche et droite (116, 120) comprend une tige (122) ayant une première extrémité (124) et une seconde extrémité, la première extrémité (124) étant couplée de façon pivotante à l'une des parties de bras plus courte (104, 108) correspondante et la seconde extrémité ayant un alésage central axial fileté (127), un boulon fileté (128) étant reçu par l'alésage central axial fileté (127) ayant une tête de boulon (130) à laquelle les forces de traction sont appliquées.

5. Système de détection de force de traction selon la revendications 2 à 4, **caractérisé en ce que** chacune des liaisons de détection gauche et droite (116, 120) comprend une rainure de renfort (132) filetée sur le boulon fileté (128) pour maintenir le boulon fileté (128) dans une position adaptée par rapport à la tige (122).

6. Système de détection de force de traction selon la revendication 4 ou 5, **caractérisé en ce que** chaque tige (122) est reçue de façon coulissante par un raccord de réduction (134) fixé dans un alésage gauche et droit (74, 76) correspondant dans le carter (56).

7. Système de détection de force de traction selon la revendication 6, **caractérisé en ce qu'**il comprend en outre un joint à soufflet (136) ayant une extrémité intérieure fixée au raccord de réduction (134) et une extrémité extérieure fixée à une extrémité extérieure de la tige (122).

8. Système de détection de force de traction selon la revendication 6 ou 7, **caractérisé par** un joint torique (138) fixé dans une rainure prévue dans une surface extérieure de la tige (122) et engrenant de façon étanche la tige (122) et le raccord de réduction (134).

9. Système de détection de force de traction selon les revendications 1 à 8, **caractérisé en ce que** l'élément de butée (123) est positionné entre l'élément élastique (121) et le transducteur de force de traction (119).

10. Système de détection de force de traction selon la revendications 1 à 9, **caractérisé en ce qu'**il comprend en outre une tour d'attelage (10) conçue pour être fixée à un châssis arrière du tracteur agricole ; des supports de liaison de traction gauche et droit (12, 14), chacun des supports de liaison de traction gauche et droit (12, 14) couplant une liaison de traction gauche et droite (24, 26) correspondant à un côté gauche et droit correspondant de la tour d'attelage (10), chaque barre de traction gauche et droite (32, 34) ayant une première partie (36, 38) fixée à un des supports de liaison de traction gauche et droit (12, 14) correspondant, chacune des barres de traction gauche et droite (32, 34) ayant une seconde partie (44, 46) positionnée vers l'arrière et vers l'intérieur par rapport à sa première partie (36, 38), les forces de traction appliquées par les liaisons de traction gauche et droite (24, 26) sur les supports de liaison de traction gauche et droit (12, 14) déviant les secondes parties (44, 46) des barres de traction gauche et droite (32, 34), le transducteur de force de traction (119) générant le signal de force de traction en réponse à la déflexion correspondante.

11. Système de détection de force de traction selon la revendication 10, **caractérisé en ce que** chacune des barres de traction gauche et droite (32, 34) prend une forme en L, la première partie (36, 38) s'étendant sensiblement perpendiculairement par rapport à la seconde partie (44, 46).
